# EUROPÄISCHE PATENTSCHRIFT

(11) **EP 3 598 048 B1**
(45) Veröffentlichungstag und Bekanntmachung des Hinweises auf die Patenterteilung: **12.08.2026**
(21) Anmeldenummer: 19190561.1
(22) Anmeldetag: 13.06.2016
(51) Int. Cl.: F28D 7/10, F28D 7/02, F28D 21/00, F28F 1/36

(54) **VORRICHTUNG ZUR ERZEUGUNG EINES BRENNBAREN PRODUKTGASES AUS KOHLENSTOFFHALTIGEN EINSATZSTOFFEN MIT EINEM WÄRMETAUSCHERSYSTEM**
DEVICE FOR PRODUCING A COMBUSTIBLE PRODUCT GAS FROM CARBONACEOUS INPUT MATERIALS WITH A HEAT EXCHANGER SYSTEM
DISPOSITIF DE PRODUCTION D'UN PRODUIT GAZEUX COMBUSTIBLE À PARTIR DE MATIÈRES PREMIÈRES CONTENANT DU CARBONE À L'AIDE D'UN SYSTÈME D'ÉCHANGEUR DE CHALEUR

(30) Priorität: 12.06.2015 DE 102015210826
(43) Veröffentlichungstag der Anmeldung: 22.01.2020
(62) Dokumentnummer(n) der früheren Anmeldung(en) nach Art. 76 EPÜ: 16731074.7 / 3 308 088
(73) Patentinhaber: Rosmarin Holdings Limited, Ramsey IM8 2LQ (IM)
(72) Erfinder: Hofmeister, Michael, IM8 2LQ Ramsey (IM); Dressler, Horst, 92360 Mühlhausen (DE)
(74) Vertreter: ERNICKE Patent- und Rechtsanwälte PartmbB

(56) Entgegenhaltungen:
- EP-A2- 1 884 634
- WO-A1-2013/124536
- AT-B- 371 591
- DE-A1- 102010 033 646
- JP-A- 2000 111 277
- JP-A- H1 162 723
- US-A1- 2002 162 649
- US-A1- 2008 190 593
- US-B1- 6 827 138

## Beschreibung

Die Offenbarung betrifft ein Wärmetauscherbauteil und ein Wärmetauschersystem mit einer Mehrzahl von solchen Wärmetauscherbauteilen zum Temperieren eines Gasstroms mit Feststoffpartikeln sowie eine Vorrichtung zur Erzeugung eines brennbaren Produktgases aus kohlenstoffhaitigen Einsatzstoffen mit einem solchen Wärmetauschersystem. Gasströme, die mit Feststoffpartikeln versetzt sind treten in Form von Rauchgas aus Verbrennungsanlagen, als Produktgasstrom in chemischen Reaktoren und insbesondere auch als brennbares Produktgas bei der Umsetzung von kohlenstoffhaltigen Feststoffen (Holzvergasung. Kohlevergasung etc.) auf.

Aus DE 10 2010 033646 A1 sind ein Verfahren und ein Schachtvergaser zur Erzeugung von Brenngas aus einem festen Brennstoff bekannt.

WO 2013/124536 A1 offenbart ein Verfahren zur Optimierung des Betriebs eines Gasgenerators.

US 2008/190593 A1 und US 2002/162649 A1 zeigen Wärmetauscher.

In der Regel müssen die heißen Gasströme mit Feststoffpartikeln gekühlt werden. Erfolgt diese Kühlung in herkömmlichen Flüssig-Gasförmig-Wärmetauschern besteht die Gefahr, dass sich die Feststoffpartikel teilweise in Wärmetauscher ablagern und dadurch die Effektivität der Wärmeübertragung erheblich verschlechtern. Auch verringern sich die Betriebszeiten, da die Wärmetauscher von Zeit zu Zeit gereinigt werden müssen.

Es ist daher Aufgabe der vorliegenden Erfindung eine Vorrichtung zur Erzeugung eines brennbaren Produktgases aus kohlenstoffhaltigen Einsatzstoffen mit einem Wärmetauschersystem mit Wärmetauscherbauteilen anzugeben, die beim Temperieren und insbesondere beim Kühlen von Gasströmen mit Feststoffpartikeln weniger leicht verschmutzen und eine hohe Wärmeübertragungskapazität besitzen.

Die Lösung dieser Aufgaben erfolgt durch Anspruch l.

Durch den quer und tangential in den Strömungskanal mündenden Gaseinlass und Gasauslass ergibt sich in dem Strömungskanal eine schraubengangförmige Strömung um die Mitte des Hauptkörpers. Die Strömungsgeschwindigkeit des Gasstroms mit

Feststoffpartikeln ist dabei in der Nähe des Gaseinlasses sehr hoch, so dass die Prandtl'sche Grenzschicht an der Innenseite des Mantels des Hauptkörpers vergleichsweise dünn ist. Durch die hohen Fliehkräfte aufgrund der hohen Strömungsgeschwindigkeit wird die Prandtl'sche Grenzschicht quasi zusammengedrückt. Damit erhöht sich der Wärmeübergang zwischen dem Gasstrom und dem Mantel erheblich, d. h. die Außenseite des Mantels gibt mehr Wärme an die Umgebung ab. Aufgrund der hohen Fliehkräfte konzentrieren sich auch die Feststoffpartikel in einem engen Bereich an der Innenseite des Mantels, so dass die Wahrscheinlichkeit von Partikelkollisionen und des Zusammenbackens von kleineren Partikeln zu größeren Partikeln stark ansteigt. Größere Feststoffpartikel lassen sich in nachgeschalteten Filtern leichter abtrennen. Schließlich wird durch die hohe Strömungsgeschwindigkeit und die damit verbundene turbulente Strömung auch verhindert, dass sich Feststoffpartikel an der Innenseite des Mantels ablagern, wie dies bei laminarer Strömung zu befürchten wäre.

Durch die Ausgestaltungen gemäß den Ansprüchen 4 bis 10 wird die Ausbildung und Aufrechterhaltung der gewünschten schraubenförmigen Gasströmung in dem ringspaltförmigen Strömungskanal gefördert.

Durch das schraubengangförmige Leitblech nach Anspruch 6 oder 7 wird die schraubengangförmige Gasströmung unterstützt und aufrechterhalten. Das schraubengangförmige Leitblech kann eine oder mehr Windungen aufweisen. Es können auch mehrere schraubengangförmige Leitbleche vorgesehen werden. Schraubengangförmige Leitbleche mit einer oder wenigen Windungen sind vorteilhaft, da sich mit der Windungszahl der Druckverlust im Wärmetauscher erhöht, was unerwünscht ist. Aus diesem Grund ist es auch vorteilhaft nur ein schraubengangförmiges Leitblech pro Wärmetauscherbauteil vorzusehen.

Durch den quer und tangential in den Strömungskanal mündenden Gaseinlass und Gasauslass ergibt sich in dem Strömungskanal eine schraubenförmige Strömung um die Mitte des Hauptkörpers.

Durch den ringspaltförmigen Strömungskanal nach Anspruch 8 oder 9 wird die schraubengangförmige Strömung des Gasstroms im Strömungskanal unterstützt.

Durch die Ausgestaltung nach Anspruch 11 wird anstelle eines Gas-Gas- ein Gas-Flüssigkeit-Wärmetauscher bereitgestellt, der eine höhere Wärmeübertragungsleistung aufweist.

Durch die Ausgestaltung nach Anspruch 14 wird dem Umstand Rechnung getragen, dass durch die Kühlung des Gasstroms im Wärmetauscherbauteil sich das Volumen des Gasstroms verringert und damit bei gleichbleibendem Strömungsvolumen sich auch die Strömungsgeschwindigkeit verringert. Durch die kleinere Querschnittsfläche des Gasauslasses im Vergleich zum Gaseinlass wird erreicht, dass Strömungsgeschwindigkeit am Gaseinlass in etwa gleich der Strömungsgeschwindigkeit im Gasauslass ist.

Durch die Volumenverminderung aufgrund des Wärmeentzugs sinkt die Strömungsgeschwindigkeit zwischen Gaseinlass und Gasauslass ab. Damit verringern sich auch die Fliehkräfte in der schraubenförmigen Gasströmung und die Dicke der Prandtl'schen Grenzschicht steigt und der Wärmeübergangskoeffizient sinkt. Um diesen unerwünschten Effekt auszugleichen, werden gemäß Anspruch 1 mehrere Wärmetauscherbauteile in Serie zu einem Wärmetauschersystem verbunden. Hierbei wird der Gasauslass des i-ten Wärmetauscherbauteils zum Gaseinlass des (i+1)-ten Wärmetauscherbauteils. Dadurch, dass die Querschnittsfläche des Gasauslasses des i-ten Wärmetauscherbauteils bzw. des Gaseinlasses des (i+1)-ten Wärmetauscherbauteils ist, kleiner als die Querschnittsfläche des Gaseinlasses des i-ten Wärmetauscherbauteils wird der Gasstrom wieder auf die ursprüngliche Strömungsgeschwindigkeit beschleunigt, so dass im Bereich des Gaseinlasses des (i+1)-ten Wärmetauscherbauteils wieder hohe Fliehkräfte wirken und die Prandtl'sche Grenzschicht eng an die Innenseite des Mantels des Hauptkörpers des (i+1)-ten Wärmetauscherbauteils gedrückt wird.

Durch die vorteilhafte Ausgestaltung nach Anspruch 3 wird das sich durch die Kühlung verringernde Volumen des Gasstroms berücksichtigt bzw. das Volumen des ringspaltförmigen Strömungskanals wird in jeder Stufe des Wärmetauschersystems an das sich verringernde Volumen des zu kühlenden Gasstroms angepasst.

Durch den Einsatz des Wärmetauschersystems in einer Vorrichtung zur Erzeugung eines brennbaren Produktgases aus kohlenstoffhaltigen Einsatzstoffen wird diese effektiver und bei gleicher Leistung verringert sich aufgrund der Kompaktheit des Wärmetauschersystems das Bauvolumen.

Anspruch 1 betrifft eine kompakte Vorrichtung zur Erzeugung eines brennbaren Produktgases aus kohlenstoffhaltigen Einsatzstoffen mit einem Wärmetauschersystem nach den obigen Erläuterungen.

Die übrigen Unteransprüche beziehen sich auf weitere vorteilhafte Ausgestaltungen der Erfindung.

Weitere Einzelheiten Merkmale und Vorteile der Erfindung ergeben sich aus der nachfolgenden Beschreibung von Ausführungsbeispielen anhand der Zeichnung.

Es zeigt
Fig. 1 eine schematische Schnittdarstellung einer ersten Ausführungsform eines Wärmetauscherbauteils gemäß der vorliegenden Erfindung;
Fig. 2 eine schematische Schnittdarstellung entlang der Linie A - A in Fig. 1;
Fig. 3 eine zweite bevorzugte Ausführungsform eines Wärmetauscherbauteils gemäß der vorliegenden Erfindung;
Fig. 4 eine schematische Schnittdarstellung einer beispielhaften Ausgestaltung eines Wärmetauschersystems mit drei Wärmetauscherbauteilen nach Fig. 1;
Fig. 5 eine schematische Schnittdarstellung einer Vorrichtung zur Erzeugung eines brennbaren Produktgases aus kohlenstoffhaltigen Einsatzstoffen mit einem Wärmetauschersystem nach Fig. 4; und
Fig. 6a eine Seitenansicht, Fig. 6b eine Ansicht in Strömungsrichtung und Fig. 6c eine perspektivische Darstellung eines schraubengangförmigen Leitblechs.

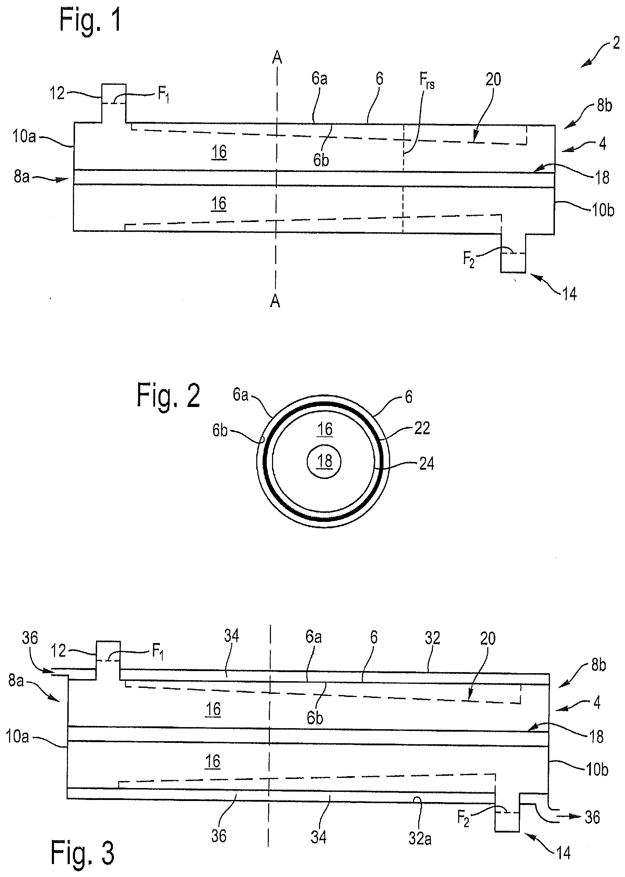

Fig. 1 zeigt eine erste Ausführungsform eines Wärmetauscherbauteils 2 zur Kühlung eines heißen Gasstroms 1 mit Feststoffpartikeln 3 gemäß der vorliegenden Erfindung. Das Wärmetauscherbauteil 2 ist ein Gas-Luft-Wärmetauscher, d. h. die Wärme aus dem Gasstrom wird an die Umgebungsluft abgegeben. Das Wärmetauscherbauteil 2 umfasst einen kreiszylindrischen Hauptkörper 4, der von einem Mantel 6 umgeben ist. Die linke und rechte Stirnseite 8a, 8b des Hauptkörpers 4 sind mit Flanschen 10a und 10b verschlossen. Der Mantel 6 besteht aus einem gut Wärme leitendem Material und umfasst eine Außenseite 6a und eine Innenseite 6b. Im Bereich der linken Stirnseite 8a mündet ein Gaseinlass 12 senkrecht zur Längsrichtung des Hauptkörpers 4 und tangential zum Außenumfang des Hauptkörpers 4 in den Hauptkörper 4. Aus dem Bereich der rechten Stirnseite 8b des Hauptkörpers 4 führt ein Gasauslass 14 senkrecht zu der Längsrichtung des Hauptkörpers 4 aus dem Hauptkörper heraus. Der Gaseinlass 12 weist über seine Länge eine konstante erste Querschnittsfläche F₁ und der Gasauslass 14 eine über seine Länge konstante zweite Querschnittsfläche F₂ auf. Die Querschnittsfläche F₁ ist dabei größer als die Querschnittsfläche F₂. In dem kreiszylindrischen Hauptkörper 4 ist zur Ausbildung eines kreisringspaltförmigen Strömungskanals 16 ein stangenförmiges Bauteil 18 mit kreisförmigen Querschnitt mittig angeordnet. Das Bauteil 18 ist an den beiden Flanschen 10a und 10b befestigt.

Durch den kreisringspaltförmigen Strömungskanal 16 und den senkrecht und tangential in den kreisringspaltförmigen Strömungskanal 16 mündenden Gaseinlass 12 ergibt sich in dem kreisringspaltförmigen Strömungskanal 16 eine schraubenförmige Gasströmung um das stangenförmige Bauteil 18. Die Querschnittsfläche Fᵣₛ des kreisringspaltförmigen Strömungskanals 16 ist zwischen Gaseinlass 12 und Gasauslass 14 konstant. Die Strömungsgeschwindigkeit v des Gasstroms 1 mit Feststoffpartikeln 3 ist dabei in der Nähe des Gaseinlasses 12 sehr hoch, so dass die Prandtl'sche Grenzschicht 20 an der Innenseite 6b des Mantels 6 des Hauptkörpers 4 vergleichsweise dünn ist. Durch die hohen Fliehkräfte aufgrund der hohen Strömungsgeschwindigkeit v wird die Prandtl'sche Grenzschicht 20 quasi zusammengedrückt. Damit erhöht sich der Wärmeübergang zwischen dem Gasstrom 1 und dem Mantel 6 erheblich, d. h. die Außenseite 6a des Mantels 6 gibt mehr Wärme an die Umgebung ab.

Aufgrund der hohen Fliehkräfte durch die erzwungene schraubenförmige Gasströmung 1 konzentrieren sich auch die Feststoffpartikel 6 in einem engen Bereich an der Innenseite des Mantels 6 und zwar schwere Feststoffpartikel 22 näher an der Innenseite 6b des Mantels 6 und leichtere Feststoffpartikel 24 in etwas größerem Abstand zu der Innenseite 6b. Hierdurch erhöht sich die Wahrscheinlichkeit von Partikelkollisionen und des Zusammenbackens von kleineren Partikeln zu größeren Partikeln stark. Größere Feststoffpartikel 3 lassen sich in nachgeschalteten Filtern leichter abtrennen. Diese Zone verstärkter Partikelkollision ist in Fig. 2, die einen Schnitt entlang der Linie A - A in Fig. 1 darstellt, schematisch dargestellt.

Schließlich wird durch die hohe Strömungsgeschwindigkeit v im Gasstrom 1 auch verhindert, dass sich Feststoffpartikel 3 an der Innenseite 6b des Mantels 6 ablagern, wie dies bei laminaren Strömungsverhältnissen zu befürchten wäre.

Da dem Gasstrom 1 über den Mantel 6 kontinuierlich Wärme entzogen wird, verringert sich das Volumen des Gasstroms 1, d. h. der Volumenstrom sinkt bei konstant bleibendem Massenstrom kontinuierlich ab. Dadurch verringert sich die Strömungsgeschwindigkeit v und folglich werden auch die Fliehkräfte im Gasstrom 1 kleiner, die Dicke der Prandtl'sche Grenzschicht 20 erhöht sich und der Wärmeübergangskoeffizient zum Mantel 6 verringert sich zwischen dem Gaseinlass 12 und dem Gasauslass 14. Diese Zunahme der Dicke der Prandtl'schen Grenzschicht 20 ist in Fig. 1 entlang der Innenseite 3b des Mantels 6 als strichlierte Linie dargestellt. Diese Geschwindigkeitsabnahme zwischen Gaseinlass 12 und Gasauslass 14 wird durch die gegenüber dem Gaseinlass 12 verkleinerte Querschnittsfläche F₂ des Gasauslasses 14 wieder ausgeglichen, so dass die Strömungsgeschwindigkeit v₂ am Gasauslass 14 im Wesentlichen der Strömungsgeschwindigkeit v₁ am Gaseinlass 12 entspricht.

Fig. 3 zeigt eine zweite Ausführungsform eines Wärmetauscherbauteils 30, das im Gegensatz zur ersten Ausführungsform des Wärmetauscherbauteils 2 als Gas-Flüssigkeits-Wärmetauscher ausgebildet ist. Das Wärmetauscherbauteil 30 unterscheidet sich von dem Wärmetauscherbauteil 2 nach Fig. 1 dadurch, dass der kreiszylinderische Hauptkörper 4 mittig in einen kreiszylindrischen Behälter 32 eingebettet ist. Hierdurch ergibt sich zwischen der Außenseite 6b des Mantels 6 und der Innenseite 32a ein kreisringförmiger Strömungskanal 34 für ein flüssiges Wärmetauschermedium 36, z. B. Wasser. Das Wärmetauschermedium 36 fließt in dem rinspaltförmigen Strömungskanal 34 turbulent. Die Wärmetauscherleistung des Wärmetauscherbauteils 30 erhöht sich dadurch gegenüber der Wärmetauscherleistung des Wärmetauscherbauteils 2 erheblich.

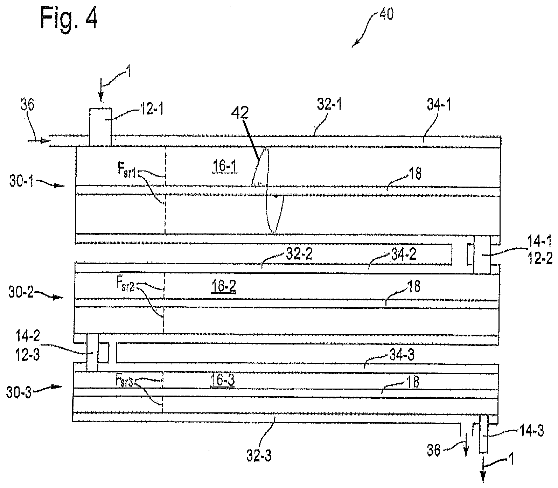

Fig. 4 zeigt eine beispielhafte Ausgestaltung eines Wärmetauschersystems 40 mit einem ersten, einem zweiten und einem dritten Wärmetauscherbauteilen 30-1, 30-2 und 30-3 nach Fig. 3. Die drei Wärmetauscherbauteile 30-i sind in Reihe hintereinandergeschaltet, so dass der Gasauslass 14-1 des ersten Wärmetauscherbauteils 30-1 zum Gaseinlass 12-2 des zweiten Wärmetauscherbauteils 30-2 und der Gasauslass 14-2 des zweiten Wärmetauscherbauteils 30-2 zum Gaseinlass 12-3 des dritten Wärmetauscherbauteils 30-3 wird.

Für die Querschnittsflächen Fᵣₛ₍₁₎, Fᵣₛ₍₂₎ und Fᵣₛ₍₃₎ der kreisringspaltförmigen Strömungskanäle 16-1, 16-2 und 16-3 der drei Wärmetauscherbauteile 30-1, 30-2 und 30-3 gilt: Fᵣₛ₍₁₎ > Fᵣₛ₍₂₎ > Fᵣₛ₍₃₎. Durch die Verringerung der Querschnittsflächen Fᵣₛ₍₁₎, Fᵣₛ₍₂₎ und Fᵣₛ₍₃₎ von einem Wärmetauscherbauteil 30-i zum nächsten 30-(i+1) wird die Verkleinerung des Gasvolumens aufgrund der Kühlung des Gasstroms 1 ausgeglichen.

Durch die Verkleinerung der Querschnittsflächen F₂₋ᵢ der Gasauslässe der einzelnen Wärmetauscherbauteil 30-i gegenüber den Querschnittsflächen F₁₋ᵢ der Gaseinlässe der einzelnen Wärmetauscherbauteil 30-i wird die Strömungsgeschwindigkeit v an den jeweiligen Gaseinlässen 12-i konstant gehalten, so dass auch in jedem Wärmetauscherbauteil 30-i in etwa die gleichen Fliehkraftverhältnisse vorliegen.

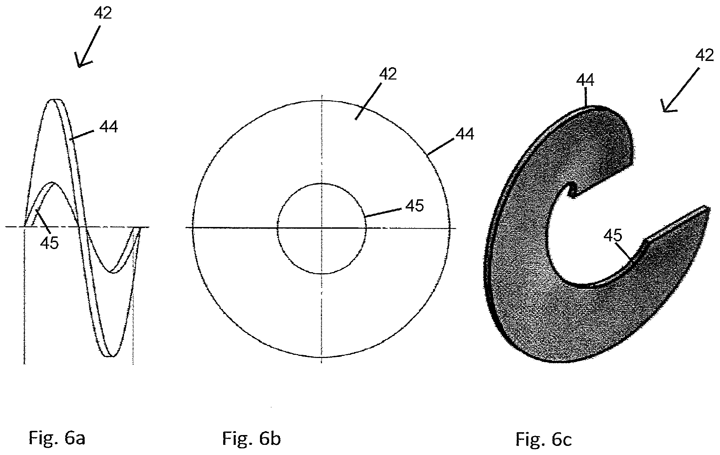

In Fig. 4 ist in dem kreisringspaltförmigen Strömungskanal 16-1 ein schraubengangförmiges Leitblech 42 angeordnet, das im Detail in den Figuren 6a, 6b und 6c gezeigt ist. Durch das Leitblech 42 wird die schraubengangförmige Gasströmung in dem Strömungskanal 16-1 unterstützt und aufrechterhalten. Das schraubengangförmige Leitblech 42 weist eine Außenkante 44 und eine Innenkante 45 auf. Die Außenkannte 44 schließt dicht mit der Innenseite 6b des Mantels 6 des Hauptkörpers 4 ab und die Innenkante 45 schließt dicht mit der Außenseite des stangenförmigen Bauteils 18 ab.

Ein solches schraubengangförmiges Leitblech 42 kann auch in den Strömungskanälen 16-2 und 16-3 des Wärmetauschersystems 40 und in den Strömungskanälen 16 der Wärmtauscherbauteile nach den Ausführungsformen nach Fig. 1 bis 3 vorgesehen sein.

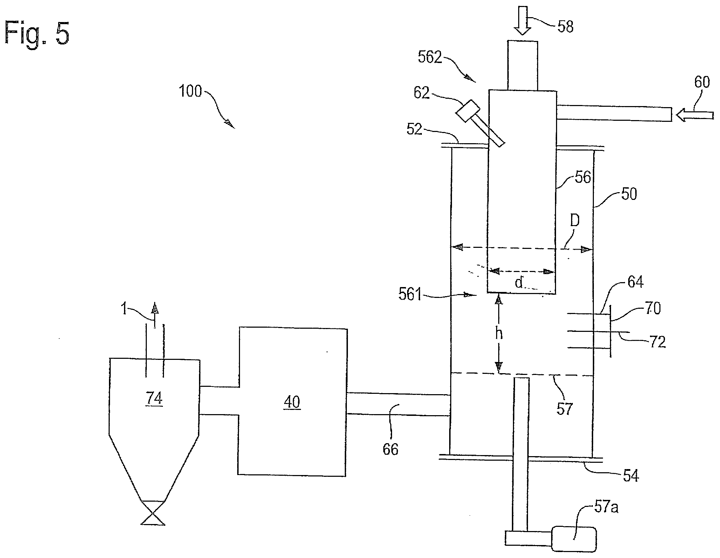

Fig. 5 zeigt eine schematische Darstellung einer beispielhaften Ausgestaltung einer Vorrichtung 100 zur Erzeugung eines brennbaren Produktgases 1 aus kohlenstoffhaltigen Einsatzstoffen mit einem Wärmetauschersystem 40 gemäß Fig. 4. Die Vorrichtung 100 umfasst einen rohrförmigen Vergaserbehälter 50 dessen Enden mit einem oberen Deckel 52 und einen unteren Deckel 54 verschlossen sind. Ein rohrförmiges Vergaserbauteil 56 mit einem offenen Ende 561 und einem geschlossenen Ende 562 ragt mit dem offenen Ende 561 in den Vergaserbehälter 50 hinein. Das geschlossene Ende 562 des Vergaserbauteils 56 ragt durch den oberen Deckel 52 aus dem Vergaserbehälter 50 heraus. Das offene Ende 561 des Vergaserbauteils 56 kommt in etwa in der Mitte des Vergaserbehälters 50 zu liegen. Im Abstand h unter dem offenen Ende 561 des Vergaserbauteils 56 ist ein drehbarer Rost 57 angeordnet, der durch einen motorischen Antrieb 57a, der den unteren Deckel 54 durchsetzt, periodisch bewegt werden kann. In das aus dem Vergaserbehälter 50 herausragende geschlossene Ende 562 des Vergaserbauteils 56 münden eine Zuführung 58 für kohlenstoffhaltige Einsatzstoffe in Form von schüttbaren Teilchen, eine Luftzuführung 60 zur Zuführung von Verbrennungsluft L in den Vergaserbehälter 50 und ein Füllstandssensor 52, mit dem sich der Füllstand der Teilchen im rohrförmigen Vergaserbauteil 56 ermitteln und überwachen lässt. Im Bereich des offenen Endes 561 des Vergaserbauteils 56 ist ein Revisionsschacht 64 vorgesehen, der die Außenwand des Vergaserbehälters 50 durchdringt. Der Revisionsschacht 64 wird durch einen Abdeckflansch 70 verschlossen, der Teil einer Temperaturmesseinrichtung 72 ist. Durch die Temperaturmesseinrichtung 72 kann die Temperatur im Vergaserbehälter 50 überwacht werden. Über dem Revisionsschacht 64 können bei Stillstand des Reaktors, Wartungsarbeiten, Reinigungsarbeiten im Reaktorbehälterinneren vorgenommen werden.

Im Bereich unter dem Rost 57 wird über einen Produktgasabzug 66 Produktgas 1 aus dem Vergaserbehälter 50 abgezogen, in einem Wärmetauschersystem 40 gemäß Fig. 4 gekühlt und in einem nachgeschalteten Zyklonabscheider 74 gereinigt. Die durch den Rost 57 fallende Asche wird durch den Produktgasstrom über den Produktgasabzug 66 aus dem Vergaserbehälter 50 ausgetragen.

Sowohl der rohrförmige Vergaserbehälter 50 als auch das rohrförmige Vergaserbauteil 56 weisen einen kreisringförmigen Querschnitt auf und sind konzentrisch zueinander angeordnet. Das rohrförmige Vergaserbauteil 56 weist einen Innendurchmesser d auf, der kleiner ist als der Innendurchmesser D des rohrförmigen Vergaserbehälters 50.

### Bezugszeichenliste:

- v: Strömungsgeschwindigkeit des Gasstroms im Strömungskanal 16
- v₁: Strömungsgeschwindigkeit des Gasstroms 1 im Gaseinlass 12
- v₂: Strömungsgeschwindigkeit des Gasstroms 1 im Gasauslass 14
- F₁: Querschnittsfläche des Gaseinlasses 12
- F₂: Querschnittsfläche des Gasauslasses 14
- Fᵣₛ₍ᵢ₎: Querschnittsflächen der Strömungskanäle 16
- L: Verbrennungsluft
- h: Abstand Rost 57 und offenes Ende 561 des Vergaserbauteils 56
- d: Innendurchmesser des Vergaserbehälters
- D: Außendurchmesser des Vergaserbauteils

- 1: Gasstrom mit Feststoffpartikeln 3
- 2: Wärmetauscherbauteil
- 3: Feststoffpartikel
- 4: kreiszylindrischer Hauptkörper
- 6: Mantel von 4
- 6a: Außenseite von 6
- 6b: Innenseite von 6
- 8a: linke Stirnseite von 4
- 8b: rechte Stirnseite von 4
- 10a: linker Flansch
- 10b: rechter Flansch
- 12: Gaseinlass
- 14: Gasauslass
- 16: kreisringspaltförmiger Strömungskanal
- 18: stangenförmiges Bauteil
- 20: Prandtlsche Grenzschicht
- 22: schwere Partikel
- 24: leichte Partikel

- 30: Wärmetauscherbauteil
- 32: zylindrischer Behälter
- 32a: Innenseite des Behälters 32
- 34: kreisringspaltförmiger Strömungskanal
- 36: flüssiges Wärmetauschermedium

- 40: Wärmetauschersystem
- 30-i: Wärmetauscherbauteile
- 12-i: Gaseinlässe
- 14-i: Gasauslässe
- 16-i: kreisringspaltförmiger Strömungskanäle
- 42: schraubengangförmiges Leitblech
- 44: Außenkante von 42
- 45: Innenkante von 42

- 100: Vorrichtung zur Erzeugung eines brennbaren Produktgases aus kohlenstoffhaltigen Einsatzstoffen
- 50: Vergaserbehälter
- 52: oberer Deckel
- 54: unterer Deckel
- 56: Vergaserbauteil
- 561: offenes Ende von 56
- 562: geschlossenes Ende von 56
- 57: Rost
- 57a: motorischer Antrieb von 57
- 58: Zuführung für kohlenstoffhaltige Einsatzstoffe
- 60: Luftzuführung
- 62: Füllstandssensor
- 64: Revisionsschacht
- 66: Produktgasabzug
- 68: Wärmetauscher
- 70: Abdeckflansch
- 72: Temperaturmesseinrichtung
- 74: Zyklonabscheider

## Patentansprüche

1. Vorrichtung (100) zum Erzeugen eines Produktgases (1) aus kohlenstoffhaltigen Einsatzstoffen, insbesondere aus schüttbaren Biomasseteilchen, mit einem Vergaserbehälter (50), einer Zuführung (58) für die kohlenstoffhaltigen Einsatzstoffe im oberen Bereich des Vergaserbehälters (50), einem im unteren Bereich des Vergaserbehälters (50) angeordneten, drehbaren Rost (57) zur Abstützung der kohlenstoffhaltigen Einsatzstoffe, einer Luftzuführung (60) zur Zuführung von Verbrennungsluft in den Vergaserbehälter (50), einem aus dem Vergaserbehälter (50) aus dem Bereich unter dem Rost (57) herausführenden Produktgasabzug (66) zum Abführen des Produktgases (1) aus dem Vergaserbehälter (50), und einem dem Produktgasabzug (66) nachgeschaltetem Wärmetauscher (40),
**dadurch gekennzeichnet, dass**
der Wärmetauscher ein Wärmetauschersystem (40) zur Kühlung eines Gasstroms (1) mit Feststoffpartikeln (3) mit einer Mehrzahl von n Wärmetauscherbauteilen (2-i, 30-1) aufweist, wobei die Wärmetauscherbauteile (2-i, 30-i) jeweils umfassen
- einen zylindrischen Hauptkörper (4) mit einem Mantel (6) aus einem Wärme leitenden Material,
- einen Gaseinlass (12) an einem Ende (8a) und einen Gasauslass (14) am anderen Ende (8b) des zylindrischen Hauptkörpers (4), wobei Gaseinlass (12) und Gasauslass (14) tangential und quer zur Längsrichtung des zylindrischen Hauptkörpers (4) in den ersten zylindrischen Hauptkörper (4) münden, wodurch zwischen dem Gaseinlass (12) und dem Gasauslass (14) in dem zylindrischen Hauptkörper (4) ein Strömungskanal (16) für einen schraubengangförmig verlaufenden Gasstrom (1) mit Feststoffpartikeln (3) ausgebildet ist,
wobei die Wärmetauscherbauteile (2-i, 30-i) seriell miteinander verbunden sind, so dass der Gasauslass (14-i) des i-ten Wärmetauscherbauteils (2-i, 30-i) der Gaseinlass (14-(i+1)) des (i+1)-ten Wärmetauscherbauteils (2-(i+1), 30-(i+1)) ist, mit i = 1 bis n-1.

2. Vorrichtung zum Erzeugen eines Produktgases nach Anspruch 1 oder 2, wobei für die Querschnittsflächen (Frs(i)) der ringspaltförmigen Strömungskanäle (16-i) der einzelnen Wärmetauscherbauteile (2-i, 30-i) gilt Frs(i) > Frs(1+1) mit i = 1 bis n-1.

3. Vorrichtung Erzeugen eines Produktgases nach einem der vorhergehenden Ansprüche, wobei der Gaseinlass (12) und der Gasauslass (14) senkrecht zur Längsrichtung des zylindrischen Hauptkörpers (4) tangential in den zylindrischen Hauptkörper (4) münden.

4. Vorrichtung zum Erzeugen eines Produktgases nach einem der vorhergehenden Ansprüche, wobei der Gasauslass (14) tangential aus dem zylindrischen Hauptkörper (4) mündet.

5. Vorrichtung zum Erzeugen eines Produktgases nach einem der vorhergehenden Ansprüche, wobei in dem zylindrischen Hauptkörper (4) wenigstens ein schraubengangförmiges Leitblech (42) angeordnet ist, das die schraubengangförmige Strömung in dem Strömungskanal (16) unterstützt.

6. Vorrichtung zum Erzeugen eines Produktgases nach dem vorhergehenden Anspruch, wobei das schraubengangförmige Leitblech (42) in Längsrichtung des zylindrischen Hauptkörpers (4) betrachtet den Querschnitt des Hauptkörpers (4) vollständig ausfüllt.

7. Vorrichtung zum Erzeugen eines Produktgases nach einem der vorhergehenden Ansprüche, wobei in dem zylindrischen Hauptkörper (4) ein stangenförmiges Bauteil (18) zur Ausbildung eines ringspaltförmigen Strömungskanals (16) angeordnet ist.

8. Vorrichtung zum Erzeugen eines Produktgases nach dem vorhergehenden Anspruch, wobei das schraubengangförmige Leitblech (42) das stangenförmige Bauteil (18) dicht umschließt und dicht mit dem Mantel (6) abschließt.

9. Vorrichtung zum Erzeugen eines Produktgases nach einem der vorhergehenden Ansprüche, wobei der zylindrische Hauptkörper (4) einen kreisförmigen Querschnitt aufweist, und wobei das stangenförmige Bauteil (18) einen kreisförmigen Querschnitt aufweist und mittig in dem zylindrischen Hauptkörper (4) angeordnet ist.

10. Vorrichtung zum Erzeugen eines Produktgases nach einem der vorhergehenden Ansprüche, wobei der zylindrische Hauptkörper (4) derart von einem zylindrischen Behälter (32) umgeben ist, dass sich ein ringspaltförmiger Strömungskanal (34) für ein Wärmetransportmedium (36) ergibt.

11. Vorrichtung zum Erzeugen eines Produktgases nach einem der vorhergehenden Ansprüche, wobei die Querschnittsfläche (Frs) des ringspaltförmigen Strömungskanals (16) im zylindrischen Hauptkörper (4) zwischen Gaseinlass (12) und Gasauslass (14) konstant ist.

12. Vorrichtung zum Erzeugen eines Produktgases nach einem der vorhergehenden Ansprüche, wobei der Gaseinlass (12) über seine Länge eine konstante erste Querschnittsfläche (F1) aufweist und der Gasauslass (14) über seine Länge eine konstante zweite Querschnittsfläche (F2) aufweist.

13. Vorrichtung zum Erzeugen eines Produktgases nach einem der vorhergehenden Ansprüche, wobei die erste Querschnittsfläche (F1) größer als die zweite Querschnittsfläche (F2) ist.

## Claims

1. Device (100) for creating a product gas (1) from carbon-containing charge materials, in particular from pourable biomass particles, having a gasifier container (50), a feed (58) for the carbon-containing charge material in the upper region of the gasifier container (50), a rotatable grating (57) arranged in the lower region of the gasifier container (50) for supporting the carbon-containing charge materials, an air feed (60) for feeding combustion air into the gasifier container (50), a product-gas exhaust (66) leading out of the gasifier container (50) from the region under the grating (57) for discharging the product gas (1) from the gasifier container (50), and a heat exchanger (40) connected downstream of the product-gas exhaust (66),
**characterised in that**
the heat exchanger comprises a heat exchanger system (40) for cooling a gas flow (1) containing solid particles (3), having a plurality of n heat exchanger components (2-i, 30-i), wherein the heat exchanger components (2-i, 30-i) each comprise
- a cylindrical main body (4) with a casing (6) made of a heat-conducting material,
- a gas inlet (12) at one end (8a) and a gas outlet (14) at the other end (8b) of the cylindrical main body (4), wherein the gas inlet (12) and the gas outlet (14) lead into the first cylindrical main body (4) tangentially and transversely to the longitudinal direction of the cylindrical main body (4), with the result that a flow duct (16) for a helically running gas flow (1) containing solid particles (3) is formed in the cylindrical main body (4),
wherein the heat exchanger components (2-i, 30-i) are connected in series with one another, such that the gas outlet (14-i) of the i-th heat exchanger component (2-i, 30-i) is connected to the gas inlet (14-(i+1)) of the (i+1)-th heat exchanger component (2-(i+1), 30-(i+1)),
where i = 1 to n-1.

2. Device for generating a product gas according to claim 1 or 2, wherein the following applies to the cross-sectional areas (Frs(i)) of the flow ducts (16-i) in the form of an annular gap of the individual heat exchanger components (2-i, 30-i): $Frs \left(i\right) > Frs \left(1+1\right)$ wherein i = 1 to n-1.

3. Device for generating a product gas according to one of the preceding claims, wherein the gas inlet (12) and the gas outlet (14) lead tangentially into the cylindrical main body (4) perpendicularly to the longitudinal direction of the cylindrical main body (4).

4. Device for generating a product gas according to one of the preceding claims, wherein the gas outlet (14) leads tangentially out of the cylindrical main body (4).

5. Device for generating a product gas according to one of the preceding claims, wherein at least one helically running baffle (42) is arranged in the cylindrical main body (4), which supports the helical flow in the flow duct (16).

6. Device for generating a product gas according to the preceding claim, wherein the helically running baffle (42) completely fills the cross-section of the main body (4) as seen in the longitudinal direction of the cylindrical main body (4).

7. Device for generating a product gas according to one of the preceding claims, wherein a rod-like component (18) for forming a flow duct (16) in the form of an annular gap is arranged in the cylindrical main body (4).

8. Device for generating a product gas as per the preceding claim,
wherein the helically running baffle plate (42) closely encloses the rod-like component (18) and ends closely at the casing (6).

9. Device for generating a product gas according to one of the preceding claims, wherein the cylindrical main body (4) has a circular cross-section, and wherein the rod-like component (18) has a circular cross-section and is arranged centrally in the cylindrical main body (4).

10. Device for generating a product gas according to one of the preceding claims, wherein the cylindrical main body (4) is surrounded by a cylindrical container (32) such that a flow duct (34) in the form of an annular gap for a heat transfer medium (36) is produced.

11. Device for generating a product gas according to one of the preceding claims, wherein the cross-sectional area (Frs) of the flow duct (16) in the form of an annular gap in the cylindrical main body (4) is constant between the gas inlet (12) and gas outlet (14).

12. Device for generating a product gas according to one of the preceding claims, wherein the gas inlet (12) has a constant first cross-sectional area (F1) along its length and the gas outlet (14) has a constant second cross-sectional area (F2) along its length.

13. Device for generating a product gas according to one of the preceding claims, wherein the first cross-sectional area (F1) is greater than the second cross-sectional area (F2).

## Revendications

1. Dispositif (100) destiné à produire un gaz produit (1) à partir de matières de départ carbonées, notamment à partir de particules de biomasse en vrac, comprenant un contenant de gazéification (50), une alimentation (58) pour les matières de départ carbonées dans la zone supérieure du contenant de gazéification (50), une grille rotative (57) disposée dans la zone inférieure du contenant de gazéification (50) pour supporter les matières de départ carbonées, une alimentation en air (60) destinée à alimenter le contenant de gazéification (50) en air de combustion, une évacuation de gaz produit (66) sortant du contenant de gazéification (50) depuis la zone sous la grille (57) pour évacuer le gaz produit (1) hors du contenant de gazéification (50), et un échangeur de chaleur (40) disposé en aval de l'évacuation de gaz produit (66),
**caractérisé en ce que**
l'échangeur de chaleur présente un système d'échangeur de chaleur (40) destiné au refroidissement d'un flux de gaz (1) contenant des particules solides (3), avec une pluralité de n composants d'échangeur de chaleur (2-i, 30-1), les composants d'échangeur de chaleur (2-i, 30-i) comprenant chacun
- un corps principal cylindrique (4) comportant une enveloppe (6) en un matériau conducteur de chaleur,
- une entrée de gaz (12) à une extrémité (8a) et une sortie de gaz (14) à l'autre extrémité (8b) du corps principal cylindrique (4), l'entrée de gaz (12) et la sortie de gaz (14) débouchant tangentiellement et transversalement à la direction longitudinale du corps principal cylindrique (4) dans le premier corps principal cylindrique (4), de sorte qu'un canal d'écoulement (16) destiné à un flux de gaz (1) contenant des particules solides (3) s'écoulant en hélice est formé entre l'entrée de gaz (12) et la sortie de gaz (14) dans le corps principal cylindrique (4),
les composants d'échangeur de chaleur (2-i, 30-i) étant reliés en série les uns aux autres, de sorte que la sortie de gaz (14-i) du ième composant d'échangeur de chaleur (2-i, 30-i) constitue l'entrée de gaz (14-(i+1)) du (i+1)ème composant d'échangeur de chaleur (2-(i+1), 30-(i+1))
où i = 1 à n-1.

2. Dispositif destiné à produire un gaz produit selon la revendication 1 ou 2, les surfaces de section transversale (Frs(i)) des canaux d'écoulement annulaires (16-i) des différents composants d'échangeur de chaleur (2-i, 30-i) vérifiant Frs(i) > Frs(1+1).
où i = 1 à n-1.

3. Dispositif destiné à produire un gaz produit selon l'une des revendications précédentes, l'entrée de gaz (12) et la sortie de gaz (14) débouchant tangentiellement dans le corps principal cylindrique (4), perpendiculairement à la direction longitudinale du corps principal cylindrique (4).

4. Dispositif destiné à produire un gaz produit selon l'une des revendications précédentes, la sortie de gaz (14) débouchant tangentiellement hors du corps principal cylindrique (4).

5. Dispositif destiné à produire un gaz produit selon l'une des revendications précédentes, au moins une tôle de guidage hélicoïdale (42) étant disposée dans le corps principal cylindrique (4), laquelle favorise l'écoulement hélicoïdal dans le canal d'écoulement (16).

6. Dispositif destiné à produire un gaz produit selon la revendication précédente, la tôle de guidage hélicoïdale (42), considérée dans la direction longitudinale du corps principal cylindrique (4), remplissant entièrement la section transversale du corps principal (4).

7. Dispositif destiné à produire un gaz produit selon l'une des revendications précédentes, un composant en forme de tige (18) étant disposé dans le corps principal cylindrique (4) afin de former un canal d'écoulement annulaire (16).

8. Dispositif destiné à produire un gaz produit selon la revendication précédente, la tôle de guidage hélicoïdale (42) entourant étroitement le composant en forme de tige (18) et venant en fermeture étanche avec l'enveloppe (6).

9. Dispositif destiné à produire un gaz produit selon l'une des revendications précédentes, le corps principal cylindrique (4) présentant une section transversale circulaire, et le composant en forme de tige (18) présentant une section transversale circulaire et étant disposé au centre du corps principal cylindrique (4).

10. Dispositif destiné à produire un gaz produit selon l'une des revendications précédentes, le corps principal cylindrique (4) étant entouré par un contenant cylindrique (32) de manière à former un canal d'écoulement annulaire (34) destiné à un fluide caloporteur (36).

11. Dispositif destiné à produire un gaz produit selon l'une des revendications précédentes, la surface de section transversale (Frs) du canal d'écoulement annulaire (16) dans le corps principal cylindrique (4) étant constante entre l'entrée de gaz (12) et la sortie de gaz (14).

12. Dispositif destiné à produire un gaz produit selon l'une des revendications précédentes, l'entrée de gaz (12) présentant sur toute sa longueur une première surface de section transversale constante (F1) et la sortie de gaz (14) présentant sur toute sa longueur une deuxième surface de section transversale constante (F2).

13. Dispositif destiné à produire un gaz produit selon l'une des revendications précédentes, la première surface de section transversale (F1) étant supérieure à la deuxième surface de section transversale (F2).
